# EUROPÄISCHE PATENTSCHRIFT

(11) **EP 4 173 952 B1**
(45) Veröffentlichungstag und Bekanntmachung des Hinweises auf die Patenterteilung: **20.12.2023**
(21) Anmeldenummer: 22202042.2
(22) Anmeldetag: 18.10.2022
(51) Int. Cl.: B64D 11/00, E03B 7/04, E03B 7/07, F04B 23/02, F04B 49/03, F04B 49/02, B64D 11/02, B64D 11/04

(54) **WASSERVERSORGUNGSSYSTEM FÜR EIN FLUGZEUG**
WATER SUPPLY SYSTEM FOR AN AIRCRAFT
SYSTÈME D'ALIMENTATION EN EAU POUR AÉRONEF

(30) Priorität: 28.10.2021 DE 102021128133
(43) Veröffentlichungstag der Anmeldung: 03.05.2023
(73) Patentinhaber: Diehl Aviation Gilching GmbH, 82205 Gilching (DE)
(72) Erfinder: Philipp, Jan Boris, 81673 München (DE); Kessler, Rolf, 86899 Landsberg (DE); Schäfer, Philipp, 80798 München (DE)
(74) Vertreter: Diehl Patentabteilung

(56) Entgegenhaltungen:
- EP-A1- 3 385 163
- EP-A1- 4 080 297
- US-A1- 2012 111 432

## Beschreibung

Die vorliegende Erfindung betrifft ein Wasserversorgungssystem für ein Flugzeug, bei dem Wasserverbraucher zum Betrieb mit Frischwasser versorgt werden.

In Flugzeugen, insbesondere Passagierflugzeugen, sind üblicherweise Wasserversorgungssysteme vorhanden, mit denen Frischwasser aus einem Wasserspeicher zu den verschiedenen Wasserverbrauchern, insbesondere Lavatories (mit Toilettenspülen und Waschbecken) und Bordküchen (mit Küchenspülen) geleitet wird. Herkömmliche Wasserversorgungssysteme enthalten Rohrleitungen mit großen Rohrquerschnitten, die zwar nur geringen Druckabfall über ihre Länge haben, die aber eine Drainage zum Schutz vor Einfrieren benötigen und deren Integration im Flugzeug sehr aufwändig und komplex ist. Eine andere Konstruktion des Wasserversorgungssystem, bei der sehr schmale Wasserleitungen aus flexiblen Kunststoff-Schläuchen mit einem Innendurchmesser von vorzugsweise nur 3 mm oder weniger zum Ermöglichen einer flexiblen Installation verwendet werden, zusätzliche Druckmittel zum Erzeugen eines hohen Wasserdrucks von vorzugsweise 150 bar zum Ausgleichen des starken Druckabfalls in den schmalen flexiblen Wasserleitungen und notwendigerweise Druckminderer vor den Wasserverbrauchern eingesetzt werden, ist zum Beispiel in der EP 3 385 163 A1 vorgeschlagen.

Es ist die Aufgabe der Erfindung, ein verbessertes Wasserversorgungssystem für Flugzeuge zu schaffen, das einfach in das Flugzeug integrierbar ist, aber auf zusätzliche Hochdrucksysteme verzichten kann.

Diese Aufgabe wird gemäß der Erfindung gelöst durch ein Wasserversorgungssystem für ein Flugzeug, das im unabhängigen Anspruch 1 definiert ist. Einige vorteilhafte Ausgestaltungen und Weiterbildungen der Erfindung sind Gegenstand der abhängigen Ansprüche.

Das erfindungsgemäße Wasserversorgungssystem für ein Flugzeug hat einen Wasserspeicher; ein oder mehr Wasserleitungen, die jeweils zu einer Verbrauchergruppe führen, die wenigstens einen Wasserverbraucher und in Wasserströmungsrichtung stromauf des wenigstens einen Wasserverbrauchers wenigstens einen Puffer zum Aufnehmen von Wasser aus der jeweiligen Wasserleitung aufweist; eine Ausführleitung zum Ausführen von Wasser aus dem Wasserspeicher in die ein oder mehr Wasserleitungen; und eine Förderpumpe in der Ausführleitung zum Fördern von Wasser aus dem Wasserspeicher in die ein oder mehr Wasserleitungen. Gemäß der Erfindung wird vorgeschlagen, die ein oder mehr Wasserleitungen jeweils als einen flexiblen Schlauch aus Kunststoff mit einem Innendurchmesser von mindestens etwa 4 mm und einer Länge von maximal etwa 100 m zu bilden, und die Förderpumpe so zu konfigurieren, dass sie das Wasser aus dem Wasserspeicher mit einem Druck von maximal etwa 25 bar und einer Strömungsrate von maximal etwa 1,4 l/min in die ein oder mehr Wasserleitungen fördert. Insbesondere beträgt der Druck, mit dem die Förderpumpe das Wasser aus dem Speicher fördert 3 bar bis 25 bar oder 3 bar bis 16 bar oder 3 bar bis 10 bar, bevorzugt 4 bar bis 16 bar oder 6 bar bis 25 bar, im Speziellen etwa 16 bar oder etwa 25 bar.

Die Verwendung von schmalen flexiblen Kunststoff-Schläuchen als Wasserleitungen hat die Vorteile, dass sie einfach in das Flugzeug integriert werden können und wenig sensibel gegenüber Toleranzen sind und keine Drainage zum Schutz gegen Einfrieren benötigen, da sie einfrieren und schnell wieder auftauen können, und durch ihre glatten Innenoberflächen keinen zusätzlichen Strömungswiderstand verursachen. Und durch die spezielle Konfiguration der Dimensionen der Wasserleitungen und der Stromförderwirkung der Förderpumpe kann ein relativ geringer Druckabfall entlang der Wasserleitungen erzielt werden, sodass im Gegensatz zum System der EP 3 385 163 A1 kein zusätzliches komplexes Hochdrucksystem erforderlich ist, wodurch das vorgeschlagene Wasserversorgungssystem noch einfacher aufgebaut und in ein Flugzeug integriert werden kann.

Das Wasserversorgungssystem kann zum Beispiel bei Wasserleitungen mit einem Innendurchmesser von etwa 5 mm einen Betriebsdruck von etwa 16 bar haben oder bei Wasserleitungen mit einem Innendurchmesser von etwa 4 mm einen Betriebsdruck von etwa 25 bar haben. Bei Längen der Wasserleitungen von beispielsweise etwa 70 m oder etwa 100 m und bei Strömungsraten von beispielsweise etwa 0,7 l/min oder etwa 1,4 l/min beträgt der Druckverlust dann gemäß entsprechenden Simulationen beim Betriebsdruck von etwa 16 bar maximal etwa 10 bis 11 bar bzw. beim Betriebsdruck von etwa 25 bar maximal etwa 19 bis 20 bar. Der Druck am Ende der Wasserleitung zum Puffer beträgt damit sicher etwas mehr als der übliche Bedarf der Wasserverbraucher von etwa 3 bar, sodass auf zusätzliche Druckmittel zur Druckerhöhung verzichtet werden kann.

Vorzugsweise führen die ein oder mehr Wasserleitungen jeweils zu maximal vier Lavatories als Wasserverbraucher. Dies ist so zu verstehen, dass eine Wasserleitung zu maximal insgesamt vier Lavatories in einer oder mehr Verbrauchergruppen führen soll und dass eine Wasserleitung höchstens zu Verbrauchergruppen führen soll, deren Wasserverbrauch insgesamt dem Wasserverbrauch von vier Lavatories entspricht. Durch diese Begrenzung des Wasserverbrauchs aus einer Wasserleitung kann der Volumenstrom niedrig genug gehalten werden, um den Druckabfall gering zu halten.

Je nach Konfiguration der Wasserverbraucher kann die Verbrauchergruppe optional ferner zwischen dem wenigstens einen Wasserverbraucher und dem Puffer wenigstens einen Druckminderer aufweisen. Durch den relativ niedrigen Druck von maximal 16 oder 25 bar durch die Förderpumpe kann in einigen Anwendungsfällen, beispielsweise bei Wasserverbrauchern, die zum Beispiel auf die 16 bar oder 25 bar ausgelegt sind, auf solche Druckminderer verzichtet werden.

In einer Ausgestaltung der Erfindung kann der der Verbrauchergruppe vorgeschaltete Puffer so ausgestaltet sein, dass er im leeren Zustand einen Luftdruck von mindestens 3 bar hat. Falls zwischen dem Puffer und dem wenigstens einen Wasserverbraucher außerdem ein Druckminderer vorhanden ist, sollte der Puffer im leeren Zustand einen Luftdruck von mindestens 4 bar haben, da der Druckminderer einen Druckverlust von etwa 1 bar erzeugt. Durch diese Weise wird die Betriebssicherheit weiter erhöht, dass der Wasserdruck im Puffer vor der Verbrauchergruppe mindestens etwa 3 bzw. 4 bar beträgt, sodass den Wasserverbrauchern mindestens 3 bar geliefert werden können. Solche Vordrücke des Puffers können beispielsweise über Luft hinter einer Membran im Puffer oder über eine Feder hinter einem Kolben im Puffer jeweils auf der Seite gegenüber dem Anschluss der Wasserleitung erzeugt werden.

In einer Ausgestaltung der Erfindung kann ferner eine Rückführleitung vorgesehen sein, die von der stromabwärtigen Seite der Förderpumpe zurück in den Wasserspeicher führt und ein Überdruckventil enthält. Das Überdruckventil ist offen bei einem Druck von mehr als etwa 25 bar auf der stromabwärtigen Seite der Förderpumpe, sodass etwas Wasser anstatt in die wenigstens eine Wasserleitung zurück in den Wasserspeicher strömt. Durch diese Maßnahme kann der beabsichtigte Betriebsdruck in den Wasserleitungen stärker gesichert werden. Im Fall der oben beschriebenen Variante des Betriebsdrucks von 16 bar ist das Überdruckventil so konfiguriert, dass es bei einem Druck von mehr als etwa 16 bar offen ist. Das Überdruckventil ist beispielsweise ein passives Ventil (d.h. grundsätzlich geschlossen und automatisch öffnend).

In vielen Anwendungsfällen kann das Wasserversorgungssystem mehrere Wasserleitungen enthalten, die jeweils zu einer Verbrauchergruppe mit wenigstens einem Wasserverbraucher führen. In diesem Fall ist die Ausführleitung vom Wasserspeicher vorzugsweise über einen Leitungsverteiler mit den mehreren Wasserleitungen verbunden. Die Förderpumpe ist in der Ausführleitung angeordnet und damit stromauf dieses Leitungsverteilers vorgesehen.

In einer Ausgestaltung der Erfindung kann wenigstens eine der ein oder mehr Wasserleitungen zu wenigstens zwei Verbrauchergruppen mit jeweils wenigstens einem Wasserverbraucher und einem Puffer führen, wobei sich die mit der gemeinsamen Wasserleitung verbundenen Puffer dann gegenseitig ausgleichen können.

Falls eine Verbrauchergruppe des Wasserversorgungssystems einen höheren Wasserbedarf hat und/oder die Wasserleitung zu einer Verbrauchergruppe länger als gewünscht ist, ist dieser Verbrauchergruppe in der zugehörigen Wasserleitung vorzugsweise eine Zusatzpumpe der Förderpumpe nachgeschaltet.

In einer Ausgestaltung der Erfindung kann die wenigstens eine Wasserleitung belüftbar sein. Die Belüftung kann zum Beispiel durch ein Belüftungsventil am Puffer oder durch einen Wasserverbraucher (z.B. offener Wasserhahn einer Lavatory) erfolgen. In diesem Fall ist die wenigstens eine Wasserleitung zusätzlich mit wenigstens einer Entleerungsleitung verbunden, die vorzugsweise über die Förderpumpe in der Ausführleitung zu einem Drainage-Wasserablauf führt. In einer bevorzugten Ausgestaltung der Erfindung sind in der Ausführleitung aus dem Wasserspeicher zusätzlich Wasserversorgungsventile stromauf und stromab der Förderpumpe vorgesehen und sind in der Entleerungsleitung aus der wenigstens einen Wasserleitung Entleerungsventile stromauf und stromab der Förderpumpe vorgesehen, um die Förderpumpe selektiv Wasser aus dem Wasserspeicher in die wenigstens eine Wasserleitung oder aus der wenigstens einen Wasserleitung zu einem Drainage-Wasserablauf fördern zu lassen.

Gegenstand der Erfindung ist auch ein Flugzeug, das wenigstens ein oben erläutertes Wasserversorgungssystem der Erfindung aufweist.

Der Erfindungsgegenstand ist durch die anhängenden Ansprüche definiert. Obige sowie weitere Merkmale und Vorteile der Erfindung werden aus der nachfolgenden beispielhaften Beschreibung bevorzugter, nicht-einschränkender Ausführungsbeispiele anhand der beiliegenden Zeichnung besser verständlich. Darin zeigen größtenteils schematisch:
- Fig. 1: ein Wasserversorgungssystem gemäß einem ersten Ausführungsbeispiel gemäß der Erfindung;
- Fig. 2: ein Wasserversorgungssystem gemäß einem zweiten Ausführungsbeispiel gemäß der Erfindung;
- Fig. 3: ein Wasserversorgungssystem gemäß einem dritten Ausführungsbeispiel gemäß der Erfindung; und
- Fig. 4: ein Wasserversorgungssystem gemäß einem vierten Ausführungsbeispiel gemäß der Erfindung.

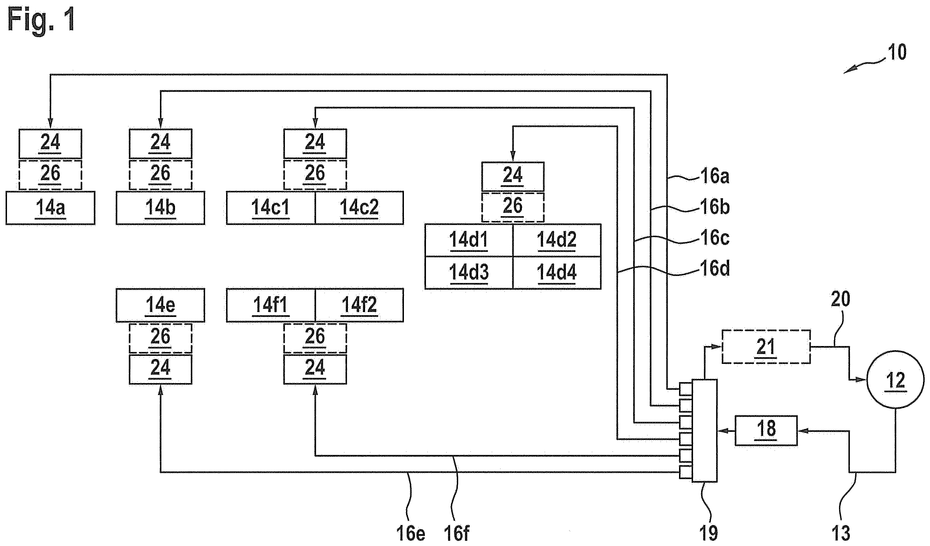

Fig. 1 veranschaulicht ein erstes Ausführungsbeispiel eines Wasserversorgungssystems für ein Flugzeug.

Das Wasserversorgungssystem 10 weist einen Wasserspeicher 12 zum Speichern von Frischwasser auf, aus dem das Wasser über eine Ausführleitung 13 ausgeführt werden kann. Das Wasser aus dem Wasserspeicher 12 wird über mehrere Wasserleitungen 16n mehreren Verbrauchergruppen, die jeweils wenigstens einen Wasserverbraucher 14n aufweisen, d.h. einer großen Anzahl von Wasserverbrauchern 14n (insbes. Lavatories und/oder Bordküchen) zugeleitet. Das Wasser wird mittels einer Förderpumpe 18 durch die Ausführleitung 13 aus dem Wasserspeicher 12 in die Wasserleitungen 16n gefördert, wobei zwischen der Ausführleitung 13 und den mehreren Wasserleitungen 16n ein entsprechender Leitungsverteiler 19 angeordnet ist.

In diesem Ausführungsbeispiel wird das Wasser beispielhaft über eine Wasserleitung 16a zu einer Verbrauchergruppe mit einem Wasserverbraucher 14a, über eine weitere Wasserleitung 16b zu einer weiteren Verbrauchergruppe mit einem Wasserverbraucher 14b, über eine weitere Wasserleitung 16c zu einer weiteren Verbrauchergruppe mit zwei Wasserverbrauchern 14c1 und 14c2, über eine weitere Wasserleitung 16d zu einer weiteren Verbrauchergruppe mit vier Wasserverbrauchern 14d1 - 4, über eine weitere Wasserleitung 16e zu einer weiteren Verbrauchergruppe mit einem Wasserverbraucher 14e, und über eine weitere Wasserleitung 16f zu einer weiteren Verbrauchergruppe mit zwei Wasserverbrauchern 14f1 und 14f2 geleitet. Selbstverständlich kann das Wasserversorgungssystem auch für weniger oder mehr Verbrauchergruppen (mit entsprechender Anzahl der Wasserleitungen 16n) und für Verbrauchergruppen mit anderen Anzahlen von Wasserverbrauchern konzipiert sein. Wie in Fig. 1 angedeutet, führt jede der Wasserleitungen 16n zu maximal vier Lavatories als Wasserverbraucher.

Wie in Fig. 1 dargestellt, enthält jede Verbrauchergruppe zudem einen Puffer 24 zum Aufnehmen / Zwischenspeichern des Wassers aus der jeweiligen Wasserleitung 16n, wobei der Puffer 24 jeweils in Wasserströmungsrichtung stromauf des wenigstens einen Wasserverbrauchers 14n angeordnet ist. Alternativ können Verbrauchergruppen, die mehrere Wasserverbraucher haben, auch mehr als einen Puffer enthalten, beispielsweise einen Puffer je Wasserverbraucher. Die mehreren Puffer einer Verbrauchergruppe wären dann aber auch mit einer gemeinsamen Wasserleitung verbunden.

Außerdem ist in Fig. 1 dargestellt, dass die Verbrauchergruppen je nach Anwendungsfall jeweils optional einen Druckminderer 26 zwischen dem Puffer 24 und dem wenigstens einen Wasserverbraucher 14n enthalten können. Im Gegensatz zu anderen herkömmlichen Wasserversorgungssystemen sind die Druckminderer 26 im erfindungsgemäßen Wasserversorgungssystem 10 in der Wasserströmungsrichtung aus den Wasserleitungen 16n nicht vor, sondern hinter dem jeweiligen Puffer 24 angeordnet, d.h. die Puffer 24 auf der Druckseite stromauf der Druckminderer 26 angeordnet. Die Druckminderer 26 sind im erfindungsgemäßen Wasserversorgungssystem 10 nicht erforderlich und können insbesondere im Fall des niedrigeren Betriebsdrucks von etwa 16 bar weggelassen werden.

Die Wasserleitungen 16n sind jeweils ein flexibler Schlauch aus Kunststoff mit einem Innendurchmesser von 4 mm oder 5 mm und einer Länge von maximal etwa 100 m oder nur 70 m, sodass sie keine Drainage zum Schutz gegen Einfrieren benötigen und sehr flexibel und einfach in ein Flugzeug integriert werden können. Die flexiblen KunststoffSchläuche haben außerdem grundsätzlich glatte Innenoberflächen, wodurch keine zusätzlichen Druckverluste auftreten. Die Förderpumpe 18 ist so konfiguriert, dass sie das Wasser aus dem Wasserspeicher 12 mit einem Druck von maximal 25 bar und einer Strömungsrate von maximal 1,4 l/min (z.B. etwa 0,7 l/min oder etwa 1,4 l/min) in jede der Wasserleitungen 16n fördert. Wenn der Innendurchmesser der Wasserleitungen 16n etwa 4 mm beträgt, beträgt der Betriebsdruck vorzugsweise etwa 25 bar, und wenn der Innendurchmesser der Wasserleitungen 16n etwa 5 mm beträgt, beträgt der Betriebsdruck vorzugsweise etwa 16 bar. Die Leistung der Förderpumpe 18 ist natürlich auf die Anzahl der angeschlossenen Wasserleitungen 16n abgestimmt. Durch den relativ geringen Druckverlust, wie oben beschrieben, beträgt der Druck am Ende der Wasserleitungen zum Puffer 24 jeweils mehr als 3 bar, d.h. etwas mehr als der übliche Bedarf der Wasserverbraucher 14n in Flugzeugen.

Um den erforderlichen Mindestdruck für die Wasserverbraucher 14n noch besser abzusichern, können die Puffer 24 der Verbrauchergruppen jeweils so ausgestaltet sein, dass sie im leeren Zustand einen Luftdruck von mindestens 3 bar haben. Falls zwischen dem Puffer 24 und den Wasserverbrauchern 14n der Verbrauchergruppe ein Druckminderer 26 angeordnet ist, hat der Puffer 24 im leeren Zustand einen Luftdruck von mindestens 4 bar, um auch den durch den Druckminderer 26 erzeugten Druckverlust von etwa 1 bar abzugleichen. Der Vordruck eines Puffers 24 kann zum Beispiel durch Luft hinter einer Membran im Puffer oder eine Feder hinter einem Kolben im Puffer, die jeweils auf der Seite gegenüber dem Anschluss der Wasserleitung 16n positioniert sind, erzeugt werden. Je nach Betriebsdruck durch die Förderpumpe und die Längen und die Integrationswege der Wasserleitungen 16n lagern die Puffer 24 das Wasser aus den Wasserleitungen 16n mit einem Druck im Bereich von 4-16 bar bzw. 4-25 bar.

Wie in Fig. 1 dargestellt, weist das Wasserversorgungssystem 10 ferner eine Rückführleitung 20 zwischen dem Leitungsverteiler 19, d.h. stromab der Förderpumpe 18, und dem Wasserspeicher 12 auf. Die Rückführleitung 20 enthält auch ein Überdruckventil 21, das beispielsweise ein passives Ventil ist, das grundsätzlich geschlossen ist und sich beim Überschreiten eines Druckschwellenwerts automatisch öffnet. Das Überdruckventil 21 ist so konzipiert, dass der Druckschwellenwert entsprechend der Konfiguration der Wasserleitungen 16n und der Förderpumpe 18 zum Beispiel 16 bar oder 25 bar beträgt. Auf diese Weise kann der beabsichtigte Betriebsdruck von 16 bar oder 25 bar in den Wasserleitungen 16n noch sicherer gewährleistet werden, weil bei einem zu hohen Betriebsdruck etwas Wasser aus den Wasserleitungen 16 durch die Rückführleitung 20 in den Wasserspeicher 12 ausgeleitet wird und damit der Betriebsdruck in den Wasserleitungen 16n entsprechend abgesenkt wird.

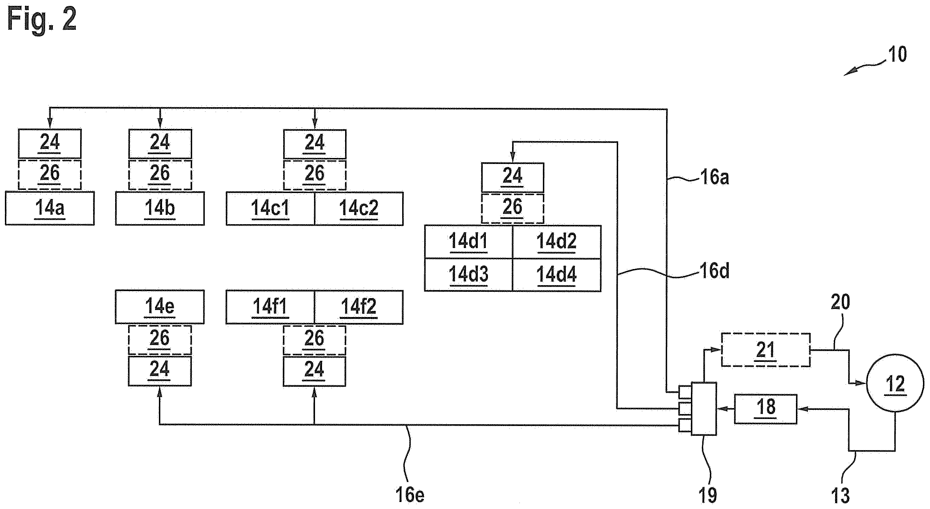

Fig. 2 veranschaulicht ein zweites Ausführungsbeispiel eines Wasserversorgungssystems für ein Flugzeug. Die gleichen Komponenten wie im ersten Ausführungsbeispiel sind mit denselben Bezugsziffern gekennzeichnet.

Das in Fig. 2 dargestellte Wasserversorgungssystem 10 unterscheidet sich vom ersten Ausführungsbeispiel dadurch, dass nicht jede der Wasserleitungen 16n zu einer einzelnen Verbrauchergruppe von Wasserverbrauchern 14n geführt ist, sondern dass wenigstens eine Wasserleitung (hier beispielhaft 16a und 16e) zu mehren Verbrauchergruppen (hier beispielhaft drei Verbrauchergruppen der Wasserverbraucher 14a / 14b / 14c1-2 und zwei Verbrauchergruppen der Wasserverbraucher 14e / 14f1-2) geführt ist. Bei diesem Konzept der Wasserführung zu den Verbrauchergruppen können sich die Puffer 24 von verschiedenen Verbrauchergruppen, die mit einer gemeinsamen Wasserleitung 16a, 16e verbunden sind, gegenseitig ausgleichen und damit zum Beispiel die Wasserzufuhr an eine variable / unterschiedliche Nutzung der jeweiligen Wasserverbraucher 14n in den verschiedenen Verbrauchergruppen angleichen.

Selbstverständlich ist die in Fig. 2 dargestellte Verbindung von mehreren Verbrauchergruppen mit gemeinsamen Wasserleitungen 16n beispielhaft und es sind natürlich auch andere Kombinationen möglich. Beispielsweise kann die Verbrauchergruppe mit dem Wasserverbraucher 14b anstatt mit den Verbrauchergruppen mit den Wasserverbrauchern 14a und 14c1-2 auch mit der Verbrauchergruppe mit dem Wasserverbraucher 14e kombiniert sein, und/oder kann die Verbrauchergruppe mit den Wasserverbrauchern 14c1-2 anstatt mit den Verbrauchergruppen mit den Wasserverbrauchern 14a und 14b auch mit der Verbrauchergruppe mit den Wasserverbrauchern 14f 1 -2 kombiniert sein.

Im Übrigen entspricht das in Fig. 2 dargestellte Wasserversorgungssystem 10 jenem des ersten Ausführungsbeispiels einschließlich der oben angegebenen Varianten.

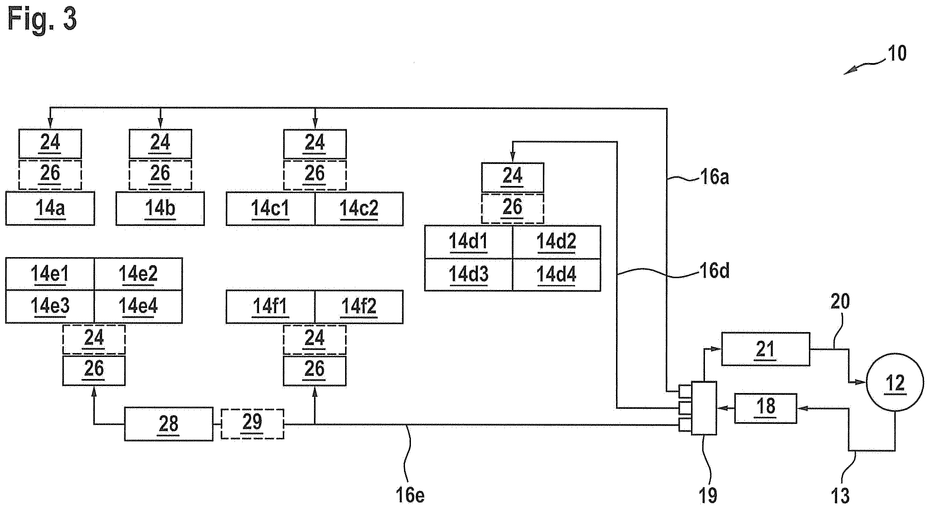

Fig. 3 veranschaulicht ein drittes Ausführungsbeispiel eines Wasserversorgungssystems für ein Flugzeug. Die gleichen Komponenten wie in den vorherigen Ausführungsbeispielen sind mit denselben Bezugsziffern gekennzeichnet.

Das in Fig. 3 dargestellte Wasserversorgungssystem 10 unterscheidet sich vom ersten und zweiten Ausführungsbeispiel dadurch, dass für eine Verbrauchergruppe eine sequenzielle Druckerhöhung in der zugehörigen Wasserleitung vorgesehen ist.

In diesem Ausführungsbeispiel hat beispielhaft die eine Verbrauchergruppe mit den vier Wasserverbrauchern 14e1-4 einen höheren Wasserbedarf als die anderen Verbrauchergruppen des Wasserversorgungssystems 10. Um diese Verbrauchergruppe trotzdem effektiv über die Förderpumpe 18 und die Wasserleitung 16e mit Wasser aus dem Wasserspeicher 12 zu versorgen, ist in der zu dieser Verbrauchergruppe geführten Wasserleitung 16e ferner eine Zusatzpumpe 28 enthalten, die der Förderpumpe 18 nachgeschaltet ist und somit dieser Verbrauchergruppe mehr Wasser als den anderen Verbrauchergruppen zuleitet. Wie in Fig. 3 angedeutet, kann dieser Zusatzpumpe 28 außerdem optional ein Zusatzpuffer 29 vorgeschaltet sein, um die Wirkungsweise der Zusatzpumpe 28 zu vereinfachen.

Selbstverständlich können auch alternativ oder zusätzlich andere Verbrauchergruppen in ihren jeweiligen Wasserleitungen mit einer solchen Zusatzpumpe unterstützt werden.

Im Übrigen entspricht das in Fig. 3 dargestellte Wasserversorgungssystem 10 jenem des zweiten Ausführungsbeispiels. Der zusätzliche Einsatz der Zusatzpumpe des dritten Ausführungsbeispiels kann aber natürlich auch im ersten Ausführungsbeispiel ausgeführt werden.

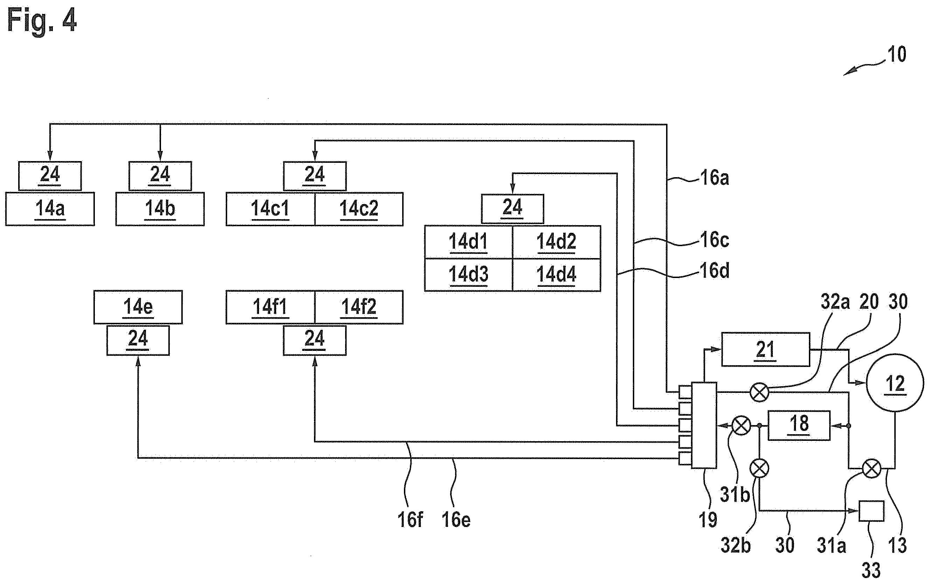

Fig. 4 veranschaulicht ein viertes Ausführungsbeispiel eines Wasserversorgungssystems für ein Flugzeug. Die gleichen Komponenten wie in den vorherigen Ausführungsbeispielen sind mit denselben Bezugsziffern gekennzeichnet.

Das in Fig. 4 dargestellte Wasserversorgungssystem 10 unterscheidet sich vom ersten Ausführungsbeispiel dadurch, dass die Wasserleitungen 16n des Wasserversorgungssystems 10 belüftbar sind. Die Belüftung kann zum Beispiel durch Belüftungsventile an den Puffern 24 oder durch die Wasserverbraucher 14n (z.B. offener Wasserhahn einer Lavatory) erfolgen.

Um diese Belüftung der Wasserleitungen 16n durchführen zu können, sind die Wasserleitungen 16n über den Leitungsverteiler 19 nicht nur mit der Ausführleitung 13 aus dem Wasserspeicher 12, sondern zusätzlich mit einer Entleerungsleitung 30 zu einem Drainage-Wasserablauf 33 verbunden. Wie in Fig. 4 dargestellt, nutzt diese Entleerungsleitung 30 vorzugsweise auch die in der Ausführleitung 13 aus dem Wasserspeicher 12 enthaltene Förderpumpe 18. Bei dieser doppelten Nutzung der Förderpumpe 18 sind in der Ausführleitung 13 aus dem Wasserspeicher 12 zusätzlich ein Wasserversorgungsventil 31a stromauf und ein Wasserversorgungsventil 31b stromab der Förderpumpe 18 vorgesehen und in der Entleerungsleitung 30 aus den Wasserleitungen 16n ein Entleerungsventil 32a stromauf und ein Entleerungsventil 32b stromab der Förderpumpe 18 vorgesehen. Im Betriebsmodus der Wasserversorgung sind die Wasserversorgungsventile 31a und 31b in der Ausführleitung 13 offen und die Entleerungsventile 32a und 32b in der Entleerungsleitung 30 geschlossen; und im Betriebsmodus der Wasserentleerung durch Belüftung sind die Wasserversorgungsventile 31a und 31b in der Ausführleitung 13 geschlossen und die Entleerungsventile 32a und 32b in der Entleerungsleitung 30 offen.

Während in diesem Ausführungsbeispiel alle Wasserleitungen 16n über den Leitungsverteiler 19 mit der einen Entleerungsleitung 30 verbunden sind, könnten alternativ auch mehrere Entleerungsleitungen für verschiedene Wasserleitungen vorgesehen sein und/oder nur ein Teil der Wasserleitungen mit Entleerungsleitung verbunden sein.

Im Übrigen entspricht das in Fig. 4 dargestellte Wasserversorgungssystem 10 jenem des ersten Ausführungsbeispiels. Selbstverständlich ist diese Ausführungsform mit Entleerungsleitung aber auch in den anderen Ausführungsbeispielen integrierbar.

Der Erfindungsgegenstand ist durch die anhängenden Ansprüche definiert. Die oben erläuterten Ausführungsbeispiele dienen nur dem besseren Verständnis der Erfindung, sollen aber nicht den durch die Ansprüche definierten Schutzbereich einschränken. Wie für den Fachmann ersichtlich, sind auch noch andere Ausführungsformen im Rahmen der Erfindung möglich, insbesondere durch Weglassen einzelner Merkmale aus den oder Hinzufügen zusätzlicher Merkmale in die oben beschriebenen Ausführungsbeispiele und durch weitere (nicht explizit erwähnte) Merkmalskombinationen von zwei oder mehr der oben beschriebenen Ausführungsbeispiele.

### BEZUGSZIFFERNLISTE

- 10: Wasserversorgungssystem
- 12: Wasserspeicher
- 13: Ausführleitung
- 14n: Wasserverbraucher
- 16n: Wasserleitungen
- 18: Förderpumpe
- 19: Leitungsverteiler
- 20: Rückführleitung
- 21: Überdruckventil
- 24: Puffer
- 26: Druckminderer
- 28: Zusatzpumpe
- 29: Zusatzpuffer
- 30: Entleerungsleitung
- 31a,b: Wasserversorgungsventile
- 32a,b: Entleerungsventile
- 33: Drainage-Wasserablauf

## Patentansprüche

1. Wasserversorgungssystem (10) für ein Flugzeug, aufweisend
einen Wasserspeicher (12);
ein oder mehr Wasserleitungen (16n), die jeweils zu einer Verbrauchergruppe führen, die wenigstens einen Wasserverbraucher (14n) und in Wasserströmungsrichtung stromauf des wenigstens einen Wasserverbrauchers (14n) wenigstens einen Puffer (24) zum Aufnehmen von Wasser aus der jeweiligen Wasserleitung (16n) aufweist;
eine Ausführleitung (13) zum Ausführen von Wasser aus dem Wasserspeicher (12) in die ein oder mehr Wasserleitungen (16n); und
eine Förderpumpe (18) in der Ausführleitung (13) zum Fördern von Wasser aus dem Wasserspeicher (12) in die ein oder mehr Wasserleitungen (16n),
wobei die ein oder mehr Wasserleitungen (16n) jeweils als ein flexibler Schlauch aus Kunststoff mit einem Innendurchmesser von mindestens 4 mm und einer Länge von maximal 100 m gebildet sind, und
**dadurch gekennzeichnet, dass**
die Förderpumpe (18) konfiguriert ist, um das Wasser aus dem Wasserspeicher (12) mit einem Druck von maximal 25 bar und einer Strömungsrate von maximal 1,4 l/min in die ein oder mehr Wasserleitungen (16n) zu fördern.

2. Wasserversorgungssystem (10) nach Anspruch 1, bei welchem die ein oder mehr Wasserleitungen (16n) jeweils zu maximal vier Lavatories als Wasserverbraucher (14n) führen.

3. Wasserversorgungssystem (10) nach einem der vorhergehenden Ansprüche, bei welchem die Verbrauchergruppe ferner zwischen dem wenigstens einen Wasserverbraucher (14n) und dem Puffer (24) wenigstens einen Druckminderer (26) aufweist.

4. Wasserversorgungssystem (10) nach einem der vorhergehenden Ansprüche, bei welchem der Puffer (24) ausgestaltet ist, um im leeren Zustand einen Luftdruck von mindestens 3 bar zu haben.

5. Wasserversorgungssystem (10) nach einem der vorhergehenden Ansprüche, bei welchem ferner eine Rückführleitung (20) vorgesehen ist, die von der stromabwärtigen Seite der Förderpumpe (18) zurück in den Wasserspeicher (12) führt und ein Überdruckventil (21) enthält, welches bei einem Druck von mehr als 25 bar auf der stromabwärtigen Seite der Förderpumpe (18) offen ist.

6. Wasserversorgungssystem (10) nach einem der vorhergehenden Ansprüche, bei welchem mehrere Wasserleitungen (16n) vorgesehen sind, die jeweils zu einer Verbrauchergruppe mit wenigstens einem Wasserverbraucher (14n) führen, und die Ausführleitung (13) über einen Leitungsverteiler (19) mit den mehreren Wasserleitungen (16n) verbunden ist.

7. Wasserversorgungssystem (10) nach einem der vorhergehenden Ansprüche, bei welchem wenigstens eine der ein oder mehr Wasserleitungen (16n) zu wenigstens zwei Verbrauchergruppen mit jeweils wenigstens einem Wasserverbraucher (14n) und einem Puffer (26) führt, wobei sich die mit der gemeinsamen Wasserleitung verbundenen Puffer (26) gegenseitig ausgleichen können.

8. Wasserversorgungssystem (10) nach einem der vorhergehenden Ansprüche, bei welchem einer Verbrauchergruppe (14e) in der zugehörigen Wasserleitung (16e) der Förderpumpe (18) eine Zusatzpumpe (28) nachgeschaltet ist, falls diese Verbrauchergruppe (14e) einen erhöhten Wasserbedarf hat oder diese Wasserleitung (16e) sehr lang ist.

9. Wasserversorgungssystem (10) nach einem der vorhergehenden Ansprüche, bei welchem
die wenigstens eine Wasserleitung (16n) belüftbar ist und mit wenigstens einer Entleerungsleitung (30) verbunden ist, die über die Förderpumpe (18) in der Ausführleitung (13) zu einem Drainage-Wasserablauf (33) führt, und
in der Ausführleitung (13) aus dem Wasserspeicher (12) Wasserversorgungsventile (31a, 31b) stromauf und stromab der Förderpumpe (18) vorgesehen sind und in der Entleerungsleitung (30) aus der wenigstens einen Wasserleitung (16n) Entleerungsventile (32a, 32b) stromauf und stromab der Förderpumpe (18) vorgesehen sind, um die Förderpumpe (18) selektiv Wasser aus dem Wasserspeicher (12) in die wenigstens eine Wasserleitung (16n) oder aus der wenigstens einen Wasserleitung (16n) zu einem Drainage-Wasserablauf fördern zu lassen.

10. Flugzeug, aufweisend wenigstens ein Wasserversorgungssystem (10) nach einem der Ansprüche 1 bis 9.

## Claims

1. Water supply system (10) for an aircraft comprising
a water tank (12);
one or more water lines (16n), each of which leads to a consumer group which has at least one water consumer (14n) and, in the water flow direction upstream of the at least one water consumer (14n), at least one buffer (24) for receiving water from the respective water line (16n);
a discharge line (13) for discharging water from the water tank (12) into the one or more water lines (16n); and
a feed pump (18) in the discharge line (13) for supplying water from the water tank (12) into the one or more water lines (16n),
wherein the one or more water lines (16n) should each be configured as a flexible hose made of plastic with an internal diameter of at least 4 mm and a length of at most 100 m, and
**characterized in that** the feed pump (18) is configured in such a manner that it conveys water from the water tank (12) into the one or more water lines (16n) at a pressure of at most 25 bar and a flow rate of at most 1.4 l/min.

2. Water supply system (10) according to Claim 1, in which the one or more water lines (16n) each lead to a maximum of four lavatories as water consumers (14n).

3. Water supply system (10) according to one of the preceding claims, in which the consumer group also has at least one pressure reducer (26) between the at least one water consumer (14n) and the buffer (24).

4. Water supply system (10) according to one of the preceding claims, in which the buffer (24) is designed to have an air pressure of at least 3 bar in the empty state.

5. Water supply system (10) according to one of the preceding claims, in which a recirculating line (20) is provided, in addition, which leads from the downstream side of the feed pump (18) back into the water tank (12) and contains an excess pressure valve (21) which is open at a pressure of more than 25 bar on the downstream side of the feed pump (18).

6. Water supply system (10) according to one of the preceding claims, in which multiple water lines (16n) which each lead to a consumer group with at least one water consumer (14n) are provided, and the discharge line (13) is connected to the multiple water lines (16n) via a header (19).

7. Water supply system (10) according to one of the preceding claims, in which at least one of the one or more water lines (16n) leads to at least two consumer groups, each having at least one water consumer (14n), and a buffer (26), wherein the buffers (26) connected to the joint water line can offset one another.

8. Water supply system (10) according to one of the preceding claims, in which a booster pump (28) is arranged downstream of a consumer group (14e) in the associated water line (16e) of the feed pump (18) if this consumer group (14e) has a greater water requirement or this water line (16e) is very long.

9. Water supply system (10) according to one of the preceding claims, in which the at least one water line (16n) is capable of being vented and is connected to at least one drainage line (30) which leads via the feed pump (18) in the discharge line (13) to a drainage water outlet (33), and
water supply valves (31a, 31b) are provided upstream and downstream of the feed pump (18) in the discharge line (13) from the water tank (12) and drainage valves (32a, 32b) are provided in the drainage line (30) from the at least one water line (16n) upstream and downstream of the feed pump (18), so that the feed pump (18) can selectively allow water to be conveyed from the water tank (12) into the at least one water line (16n) or from the at least one water line (16n) to a drainage water outlet.

10. Aircraft having at least one water supply system (10) according to one of Claims 1 to 9.

## Revendications

1. Système d'alimentation en eau (10) pour un aéronef, présentant
un réservoir d'eau (12) ;
une ou plusieurs conduites d'eau (16n), qui mènent chacune à un groupe de consommateurs présentant au moins un consommateur d'eau (14n) et, en amont de l'au moins un consommateur d'eau (14n) dans la direction d'écoulement de l'eau, au moins un réservoir intermédiaire (24) pour recevoir de l'eau de la conduite d'eau respective (16n) ;
une conduite d'évacuation (13) pour évacuer l'eau du réservoir d'eau (12) dans les une ou plusieurs conduites d'eau (16n) ; et
une pompe de transport (18) dans la conduite d'évacuation (13) pour transporter l'eau du réservoir d'eau (12) dans les une ou plusieurs conduites d'eau (16n),
les une ou plusieurs conduites d'eau (16n) étant chacune formées sous la forme d'un tuyau flexible en matière plastique ayant un diamètre intérieur d'au moins 4 mm et une longueur maximale de 100 m, et
**caractérisé en ce que**
la pompe de transport (18) est configurée pour transporter l'eau du réservoir d'eau (12) dans les une ou plusieurs conduites d'eau (16n) à une pression maximale de 25 bars et à un débit maximal de 1,4 l/min.

2. Système d'alimentation en eau (10) selon la revendication 1, dans lequel les unes ou plusieurs conduites d'eau (16n) mènent chacune à un maximum de quatre blocs toilettes en tant que consommateurs d'eau (14n).

3. Système d'alimentation en eau (10) selon l'une quelconque des revendications précédentes, dans lequel le groupe de consommateurs présente en outre au moins un réducteur de pression (26) entre l'au moins un consommateur d'eau (14n) et le réservoir intermédiaire (24) .

4. Système d'alimentation en eau (10) selon l'une quelconque des revendications précédentes, dans lequel le réservoir intermédiaire (24) est conçu pour avoir une pression d'air d'au moins 3 bars à l'état vide.

5. Système d'alimentation en eau (10) selon l'une quelconque des revendications précédentes, dans lequel il est en outre prévu une conduite de retour (20) qui mène du côté aval de la pompe de transport (18) en retour vers le réservoir d'eau (12) et qui contient une soupape de surpression (21) qui est ouverte du côté aval de la pompe de transport (18) à une pression de plus de 25 bars.

6. Système d'alimentation en eau (10) selon l'une quelconque des revendications précédentes, dans lequel il est prévu plusieurs conduites d'eau (16n) qui mènent chacune à un groupe de consommateurs avec au moins un consommateur d'eau (14n), et la conduite d'évacuation (13) est reliée aux plusieurs conduites d'eau (16n) par l'intermédiaire d'un répartiteur de conduites (19).

7. Système d'alimentation en eau (10) selon l'une quelconque des revendications précédentes, dans lequel au moins l'une des une ou plusieurs conduites d'eau (16n) mène à au moins deux groupes de consommateurs ayant chacun au moins un consommateur d'eau (14n) et un réservoir intermédiaire (26), les réservoirs intermédiaires (26) reliés à la conduite d'eau commune pouvant s'équilibrer mutuellement.

8. Système d'alimentation en eau (10) selon l'une quelconque des revendications précédentes, dans lequel une pompe supplémentaire (28) est montée en aval d'un groupe de consommateurs (14e) dans la conduite d'eau (16e) correspondante de la pompe de transport (18) si ce groupe de consommateurs (14e) a un besoin accru en eau ou si cette conduite d'eau (16e) est très longue.

9. Système d'alimentation en eau (10) selon l'une quelconque des revendications précédentes, dans lequel l'au moins une conduite d'eau (16n) peut être ventilée et est reliée à au moins une conduite de vidange (30) qui mène à une sortie d'eau de drainage (33) par l'intermédiaire de la pompe de transport (18) dans la conduite d'évacuation(13), et
des soupapes d'alimentation en eau (31a, 31b) sont prévues en amont et en aval de la pompe de transport (18) dans la conduite d'évacuation (13) du réservoir d'eau (12), et des soupapes de vidange (32a, 32b) sont prévues en amont et en aval de la pompe de transport (18) dans la conduite de vidange (30) de l'au moins une conduite d'eau (16n), afin de permettre à la pompe de transport (18) de pomper sélectivement de l'eau du réservoir d'eau (12) dans l'au moins une conduite d'eau (16n) ou de l'au moins une conduite d'eau (16n) vers une sortie d'eau de drainage.

10. Aéronef, présentant au moins un système d'alimentation en eau (10) selon l'une quelconque des revendications 1 à 9.
